Europäisches Patentamt

European Patent Office

Office européen des brevets

(11) Veröffentlichungsnummer: **0 345 646**
**A2**

## (12) EUROPÄISCHE PATENTANMELDUNG

(21) Anmeldenummer: **89109944.2**

(22) Anmeldetag: **01.06.89**

(51) Int. Cl.⁴: **B60C 27/00 , B60C 27/10**

(30) Priorität: **10.06.88 DE 8807602 U**

(43) Veröffentlichungstag der Anmeldung:
**13.12.89 Patentblatt 89/50**

(84) Benannte Vertragsstaaten:
**AT CH DE LI**

(71) Anmelder: **Steirische Kettenfabriken**
**Pengg-Walenta KG**
**Theodor-Körner Strasse 59**
**A-8021 Graz(AT)**

(72) Erfinder: **Walenta, Gerhart, Dipl.-Ing.**
**Baumschulgasse 18**
**A-8010 Graz(AT)**
Erfinder: **Kronsteiner, Herbert**
**Strassganger Strasse 182**
**A-8052 Graz(AT)**

(74) Vertreter: **Fehners, Klaus Friedrich, Dipl.-Ing.**
**Dipl.-Wirtsch.-Ing. et al**
**Patentanwälte Dipl.-Ing. A. Wedde Dipl.-Ing.**
**K. Empl Dipl.-Ing., Dipl.-Wirtsch.-Ing. K.**
**Fehners Schumannstrasse 2**
**D-8000 München 80(DE)**

(54) **Gleitschutzkette für Fahrzeugreifen.**

(57) Es wird eine Gleitschutzkette für Fahrzeugreifen mit bei montierter Kette jeweils einer gegen die Außenseite des Reifens zur Anlage kommenden, äußeren Halterung und einer gegen die Innenseite des Reifens zur Anlage kommenden, als offener federnder Stahlbügel ausgebildeten inneren Halterung für sich über die Lauffläche des Reifens in Form eines Laufkettennetzes erstreckende Kettenstrangabschnitte geschaffen, wobei die Endglieder der jeweiligen Kettenstrangabschnitte insbesondere an der inneren Halterung drehbar gelagert sind, um mit einem, den Zwischenraum zwischen den Enden der inneren Halterung überbrückenden Spannstrang, welcher nach mindestens einmaliger Umlenkung um die Lauffläche des Reifens zur äußeren Halterung geführt ist und wobei die innere Halterung mindestens an einem ihrer Enden eine mehrteilig ausgebildete Befestigungs- und Umlenkvorrichtung für den Spannstrang aufweist und wobei in diese Vorrichtung durch Endglieder von Kettenstrangabschnitten des Laufkettennetzes Bewegungen um die Enden der inneren Halterung einleitbar sind, wobei die Befestigungs- und Umlenkvorrichtung dreiteilig ausgebildet ist, nämlich aus einem ersten, für die Lagerung der Befestigungs- und Umlenkvorrichtung an einem Ende der hinteren Halterung bestimmten Teil, einem weiteren, für die Befestigung und/oder Umlenkung des Spannstranges ausgebildeten Teil und einem dritten, für den Anschluß eines Endgliedes eines Kettenstrangabschnittes des Laufkettennetzes vorge sehen Teil besteht und diese drei Teile ineinader steckbar und über das Endglied des Kettenstrangabschnittes auch verschließbar sind.

Fig.1a

## Gleitschutzkette für Fahrzeugreifen

Die Erfindung betrifft eine Gleitschutzkette für Fahrzeugreifen mit bei montierter Kette jeweils einer gegen die Außenseite des Reifens zur Anlage kommenden, äußeren Halterung und einer gegen die Innenseite des Reifens zur Anlage kommenden, als offener federnder Stahlbügel ausgebildeten inneren Halterung für sich über die Lauffläche des Reifens in Form eines Laufkettennetzes erstreckende Kettenstrangabschnitte, wobei die Endglieder der jeweiligen Kettenstrangabschnitte insbesondere an der inneren Halterung drehbar gelagert sind, um mit einem, den Zwischenraum zwischen den Enden der inneren Halterung überbrückenden Spannstrang, welcher nach mindestens einmaliger Umlenkung um die Lauffläche des Reifens zur äußeren Halterung geführt ist und wobei die innere Halterung mindestens an einem ihrer Enden eine mehrteilig ausgebildete Befestigungs- und Umlenkvorrichtung für den Spannstrang aufweist und wobei in diese Vorrichtung durch Endglieder von Kettenstrangabschnitten des Laufkettennetzes Bewegunger um die Enden der inneren Halterung einleitbar sind.

Eine solche Gleitschutzkette ist aus der DE-OS 35 15 104 bekannt.

Die dort beschriebene Befestigungs- und Umlenkvorrichtung ist zwei teilig ausgebildet, wobei ein erstes Teil als U-förmiges Umlenkstück für die Befestigung und/oder Umlenkung des Spannstranges und ein ebenfalls U-förmiges zweites Teil als Anschlußstück für ein Endglied eines Kettenstrangabschnittes des Laufkettennetzes ausgebildet ist. Beide Teile bilden zusammengesteckt eine Drehlagerung für das aufgestauchte Ende der als Federstahlbügel ausgebildeten inneren Halterung.

Nachteilig bei dieser bekannten Ausführungsform ist, daß insbesondere im Stegbereich des als Stanzteil ausgebildeten Umlenkstückes erhebliche Biegespannungen auftreten können und sich damit das Umlenkstück in diesem Bereich verformen kann.

Aufgabe der vorliegenden Erfindung ist es deshalb, den vorstehend geschilderten Nachteil zu vermeiden, so daß gewährleistet ist, daß keine die Funktionsweise der Anschlußstücke beeinträchtigenden Verformungen derselben auftreten können.

Diese Aufgabe wird dadurch gelöst, daß bei einer Gleitschutzkette der eingangs genannten Art die Befestigungs- und Umlenkvorrichtung dreiteilig ausgebildet ist, wobei das erste, für die Lagerung der Befestigungs- und Umlenkvorrichtung an einem Ende der hinteren Halterung ausgebildete Teil ein Lagerstück ist, welches einen Endabschnitt der hinteren Halterung aufnimmt und um diesen drehbar ist, das zweite, für die Befestigung und/oder Umlenkung des Spannstranges ausgebildete Teil ein Umlenkstück ist, welches benachbart zum Endabschnitt der inneren Halterung im Lagerstück gelagert ist, und das dritte für den Anschluß eines Endgliedes eines Kettenstrangabschnittes des Laufkettennetzes ausgebildete Teil ein Anschlußstück ist, welches das Lagerstück U-förmig umfaßt.

Diese Ausbildung der Befestigungs- und Umlenkvorrichtung ist gegenüber der eingangs beschriebenen, aus der DE-OS 35 05 104 bekannten Vorrichtung wesentlich stabiler ausgebildet, insbesondere werden die aus dem Spannstrang herrührenden Zugkräfte nahezu geradlinig und ohne daß besondere Biegespannungen in der Vorrichtung hervorgerufen werden, über das Lagerstück auf den Endabschnitt der hinteren Halterung übertragen. Hierbei bleibt der aus dem vorgenannten Stand der Technik bekannte Vorteil erhalten, daß die Befestigungs- und Umlenkvorrichtung in ihrer mehrteiligen Bauweise in einfacher Weise durch Ineinanderstecken am Ende der hinteren Halterung befestigt und durch Einsetzen des Endgliedes des Kettenstrangabschnittes des Laufkettennetzes befestigt und sozusagen verschlossen werden kann. Dabei bleibt die Möglichkeit bestehen, diese Befestigungs- und Umlenkvorrichtung auch von Hand wieder zu demontieren und durch, im Falle von Beschädigung, Ersatzteile zu ersetzen.

In vorteilhafter Weiterbildung der Erfindung ist das Lagerstück als scheibenförmiger Körper ausgebildet und weist eine Dicke auf, die annähernd dem Durchmesser des Endabschnittes der inneren Halterung entspricht und wobei das Lagerstück eine annähernd mittig angeordnete, schlitzförmig ausgebildete Ausnehmung zur Aufnahme des Endabschnittes mit seiner nietenkopfförmigen Aufstauchung der inneren Halterung sowie zur Lagerung des Umlenkstückes aufweist.

Bevorzugt weist die Ausnehmung eine Breite auf, welche wenig größer als der Durchmesser des Endabschnittes der inneren Halterung ist und eine Länge aufweist, welche annähernd 2/3 der Länge des Lagerstückes entspricht.

Vorteilhaft weist die Ausnehmung annähernd auf ihrer halben Länge eine Erweiterung zur Aufnahme der nietenkopfförmigen Aufstauchung des Endabschnitte der inneren Halterung auf.

Diese vorstehend geschilderte Ausbildung des Lagerstückes gewährleistet insbesondere die biegespannungsfreie Übertragung der aus dem Spannstrang herrührenden Zugkräfte auf das Ende der hinteren Halterung, da der Kräfteverlauf durch die scheibenförmige Ausbidung des Lagerstückes nahezu geradlinig zwischen Spannstrang und hinterer Halterung erfolgt.

In erfindungsgemäßer Weiterbildung ist das Anschlußstück U-förmig ausgebildet, wobei seine Schenkel über einen Steg mit einem Abstand voneinander angeordnet sind, welcher wenig größer als die Dicke des Lagerstückes ist und das Anschlußstück über das Lagerstück steckbar ist.

Vorteilhaft weist das Anschlußstück in seinen Schenkeln mittig angeordnete Schlitze auf, welche beim Aufstecken auf das Lagerstück dessen Erweiterung der Ausnehmung sowie die sich dort befindende nietenkopfförmige Aufstauchung des Endabschnittes der inneren Halterung frei lassen.

Erfindungsgemäß ist die Länge des Anschlußstückes kürzer als die Länge des schlitzförmig ausgebildeten Ausnehmung im Lagerstück und in dem überstehenden Ende der Ausnehmung ist das Umlenkstück mit seinem einen Ende beweglich befestigt.

Diese vorbeschriebene Ausführung des Anschlußstückes gewährleistet, daß das Lagerstück nach Überschieben des Anschlußstückes auf dem Endabschnitt der hinteren Halterung gegen Herabfallen gesichert ist, wobei die besondere Gestaltung der Ausnehmung in Verbindung mit den Schlitzen in den Schenkeln des Anschlußstückes die nietenkopfförmige Aufstauchung der hinteren Halterung frei läßt. Gleichzeitig wird durch diese Kombination der beiden Teile der Befestigungs- und Umlenkvorrichtung erreicht, daß eine Drehbarkeit gegeben ist.

In erfindungsgemäßer Weiterbildung ist das Umlenkstück als Lastschlaufe, beispielsweise in Schäkelform ausgebildet und mit seinem einen Ende in der Ausnehmung des Lagerstückes beweglich gelagert und hält mit seinem anderen Ende entweder das Endglied des Spannstranges oder lenkt den durch sich hindurchgeführten Spannstrang um. Vozugsweise ist an dem dem Spannstrang zugeordneten Ende des Umlenkstückes eine die Umlenkung des Spannstranges fördernde Rolle vorgesehen.

Diese Ausbidung des Umlenkstückes erlaubt eine gewissermaßen kar danische Aufhängung bzw. Lagerung am Lagerstück und damit an der hinteren Halterung. Dadurch, daß das Umlenkstück auch nicht gleichzeitig, wie aus dem Stand der Technik bekannt, das Lagerstück für den Anschluß an dem Endabschnitt der hinteren Halterung bildet, wird die eingangs geschilderte biegespannungsfreie Übertragung der Zugkräfte auf den Spannstrang gewährleistet.

Ein die Erfindung nicht beschränkendes Ausführungsbeispiel ist in den Zeichnungen dargestellt. Es zeigen:

Fig. 1 eine Seitenansicht auf die dreiteilige Befestigungs- und Umlenkvorrichtung,

Fig. 2 einen Schnitt gemäß Linie II-II in Fig. 1,

Fig. 3 einen Schnitt gemäß Linie III-III in Fig. 1,

Fig. 4 einen Schnitt gemäß Fig. 2, jedoch mit anderer Ausbildung des Umlenkstückes, und

Fig. 5 a bis 5 d Ansichten auf die unterschiedlich ausgebildeten Teile, welche zusammengesetzt die Befestigungs- und Umlenkvorrichtung gemäß Fig. 1 bilden.

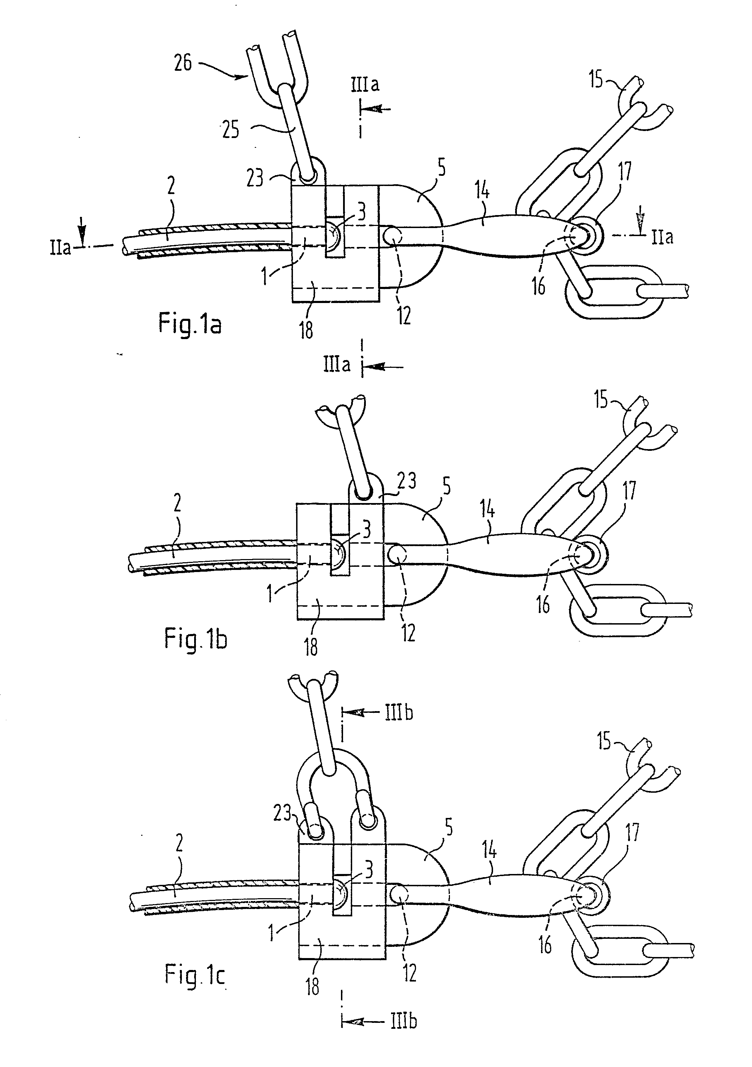

In Fig. 1 ist eine Gesamtansicht der Befestigungs- und Umlenkvorrichtung abgebildet, wie sie am Endabschnitt 1 der als Federstahlbügel ausgebildeten hinteren Halterung 2 drehbar befestigt ist. Der Endabschnitt 1 der inneren Halterung weist eine nietenkopfförmige Aufstauchung 3, auf welche das Abrutschen der Befestigungs- und Umlenkvorrichtung vom Endabschnitt 1 der inneren Halterung 2 verhindert.

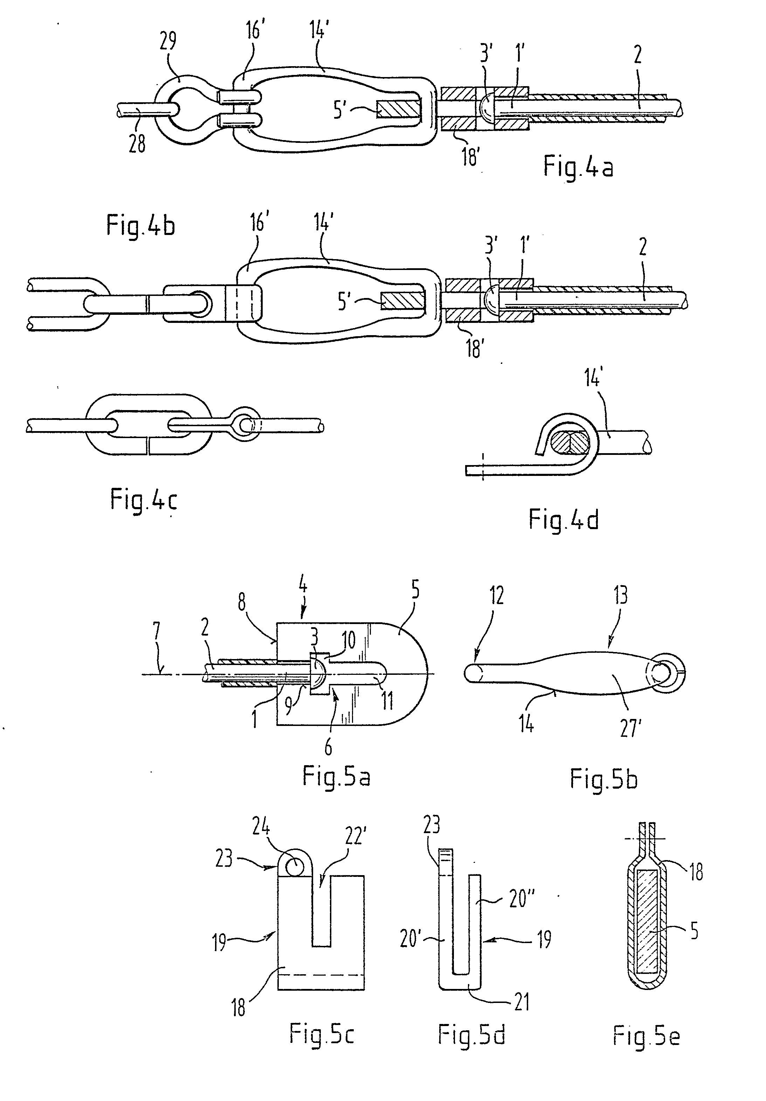

Die Befestigungs- und Umlenkvorrichtung ist dreiteilig ausgebildet, wie in Fig. 5 a bis 5 d dargestellt. Das erste Teil 4 ist das Lagerstück 5, welches zur unmittelbaren Befestigung der gesamten Befestigungs- und Umlenkvorrichtung auf dem Endabschnitt 1 der inneren Halterung 2 vorgesehen ist und, wie in Fig. 5 a dargestellt, vorzugsweise aus einer, beispielsweise als Stanzteil hergestellten Scheibe besteht. Diese Scheibe weist eine Dicke auf, welche annähernd dem Durchmesser des Endabschnittes 1 der inneren Halterung 2 entspricht und weist eine im wesentlichen rechteckige Form auf. Das Lagerstück 5 enthält eine Ausnehmung 6, welche im Verlauf seiner Mittellinie 7 nach Art eines Sackschlitzes ausgebildet ist, beginnend mit an ihrer dem Endabschnitt 1 der inneren Halterung 2 zugewandten Seitenkante 8. Diese schlitzförmige Ausnehmung 6 zeigt im wesentlichen eine lichte Weite, welche wenig größer ist als der Durchmesser des Endabschnittes 1 der inneren Halterung 2. In einem unmittelbar der Seitenkante 8 folgenden Bereich 9 nimmt diese Ausnehmung 6 den Endabschnitt 1 der inneren Halterung 2 drehbar lagernd auf, wobei annähernd mittig im Bereich der Ausnehmung 6 eine Aufweitung 10 ausgebildet ist, welche zur Aufnahme der nietenkopfförmige Aufstauchung 3 des Endabschnittes 1 der inneren Halterung 2 vorgesehen ist. Der dieser Aufweitung 10 folgende Bereich 11 der Ausnehmung 6 dient zur beweglichen Lagerung des einen Endes 12 des den zweiten Teil 13 bildenden Umlenkstückes 14.

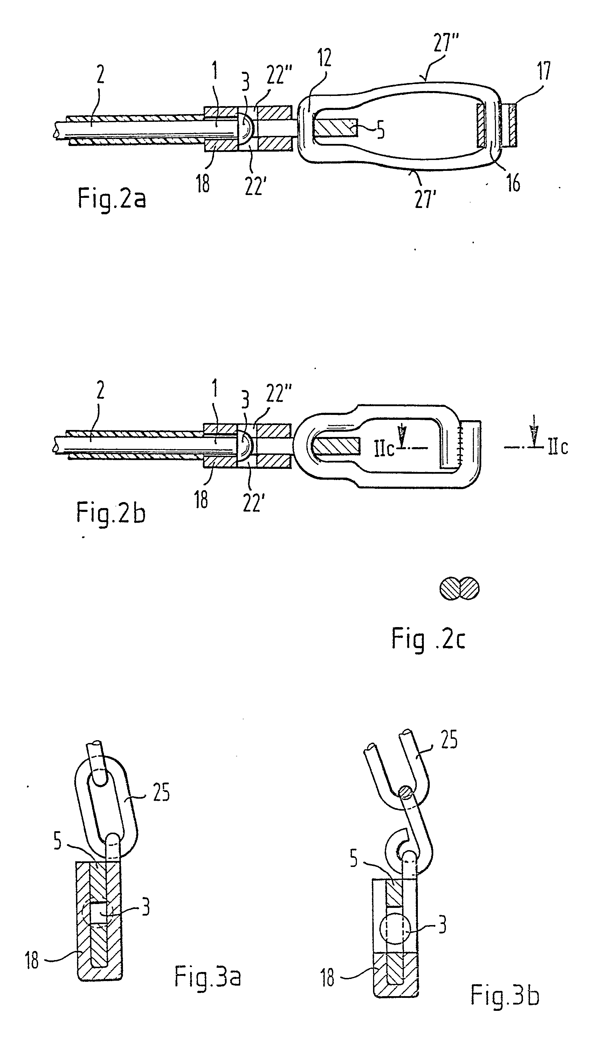

Das Umlenkstück 14 ist, wie in Fig. 2 dargestellt, als geschlossene Lastschlaufe ausgebildet, welche die Umlenkung für den Spannstrang 15 bildet, in dem dieser durch die geschlossene Lastschlaufe um das andere Ende 16 hindurchgeführt ist, wobei auf dem anderen Ende 16 zur besseren Umlenkung des Spannstranges 15 eine Rolle 17 vorgesehen ist.

Damit nun Lagerstück 5 mit Umlenkstück 14 nicht seitlich von dem Endabschnitt 1 der inneren Halterung 2 abfallen kann, wird über das Lagerstück 5 das in Fig. 5 c dargestellte Anschlußstück 18 ausgebildete dritte Teil 19 gesteckt. Das Anschlußstück 18 weist zwei Schenkel 20' und 20'' auf, welche in einem Abstand voneinander über einen Steg 21 verbunden sind. Der Abstand zwischen den Schenkeln 20' und 20'' ist wenig größer als die Dicke des Lagerstückes 5 bzw. der Durchmesser des Endabschnittes 1 der inneren Halterung 2. Hierzu auch Fig. 3.

Weiter weist das Anschlußstück 18 in seinen Schenkeln 20' und 20'' sackschlitzförmige Ausnehmungen 22' bzw. 22'' auf, welche in ihrer Breite der Länge der Aufweitung 10 in der Ausnehmung 6 im Lagerstück 5 entsprechen und damit beim Aufstekken des Anschlußstückes 18 auf das Lagerstück 5 die nietenkopfförmige Aufstauchung 3 des Endabschnittes 1 der inneren Halterung 2 frei läßt. Einer der Schenkel, beispielsweise gemäß Fig. 5 d Schenkel 20', weist gegenüber dem anderen Schenkel 20'' eine Verlängerung 23 auf, welche eine Bohrung 24 enthält und in welche das Endglied 25 eines Kettenstrangabschnittes 26 des Laufkettennetzes dient.

Das Endglied 25 sichert das Anschlußstück 18 vor dem Abgleiten vom Lagerstück 5, bildet infolgedessen einen Verschlußteil der gesamten Befestigungs- und Umlenkvorrichtung.

Das Umlenkstück 14 ist vorteilhaft aus einem Draht bestimmter Dicke als geschlossene Lastschlaufe ausgebildet, wobei vorteilhaft die dem zweiten Ende 16 zugewandten Seiten 27' und 27'' durch Pressung abgeflacht und ausgeweitet ausgebildet sind, wodurch eine bessere Führung des Spannstranges 15 erreicht wird.

Lagerstück 5 und Anschlußstück 18 können als Gußteile hergestellt sein, andererseits aber auch als in einfacher Weise aus Blechen herzustellende Stanzteile, welche dann im Falle des Anschlußstükkes 18 eine entsprechende Formgebung durch Biegung erhalten.

In Fig. 4 ist der dem Endabschnitt 1 der inneren Halterung 2 gegenüberliegende andere Endabschnitt 1' der inneren Halterung 2 mit der nietenkopfförmigen Aufstauchung 3' abgebildet und auf welchem wiederum eine entsprechend ausgebildete Befestigungs- und Umlenkvorrichtung mit Lagerstück 5', Umlenkstück 14' und Anschlußstück 17' befestigt ist. An dem Umlenkstück 14' ist das Endglied 28 des Spannstranges 15 mittels eines Seitenhakens 29 beweglich am Ende 16' befestigt, hier erfolgt eine Umlenkung des Spannstranges 15 nicht.

## Ansprüche

1.) Gleitschutzkette für Fahrzeugreifen mit bei montierter Kette jeweils einer gegen die Außenseite des Reifens zur Anlage kommenden, äußeren Halterung und einer gegen die Innenseite des Reifens zur Anlage kommenden, als offener federnder Stahlbügel ausgebildeten inneren Halterung für sich über die Lauffläche des Reifens in Form eines Laufkettennetzes erstreckende Kettenstrangabschnitte, wobei die Endglieder der jeweiligen Kettenstrangabschnitte insbesondere an der inneren Halterung drehbar gelagert sind, um mit einem, den Zwischenraum zwischen den Enden der inneren Halterung überbrückenden Spannstrang, welcher nach mindestens einmaliger Umlenkung um die Lauffläche des Reifens zur äußeren Halterung geführt ist und wobei die innere Halterung mindestens an einem ihrer Enden eine mehrteilig ausgebildete Befestigungs- und Umlenkvorrichtung für den Spannstrang aufweist und wobei in diese Vorrichtung durch Endglieder von Kettenstrangabschnitten des Laufkettennetzes Bewegungen um die Enden der inneren Halterung einleitbar sind, **dadurch gekennzeichnet,** daß die Befestigungs- und Umlenkvorrichtung dreiteilig ausgebildet ist, wobei das erste, für die Lagerung der Befestigungs- und Umlenkvorrichtung an einem Ende der hinteren Halterung (2) ausgebildete Teil (4) ein Lagerstück (5) ist, welches einen Endabschnitt (1) der hinteren Halterung (2) aufnimmt und um diesen drehbar ist, das zweite, für die Befestigung und/oder Umlenkung des Spannstranges (15) ausgebildete Teil (13) ein Umlenkstück (14) ist, welches benachbart zum Endabschnitt (1) der inneren Halterung (2) im Lagerstück (5) gelagert ist, und das dritte, für den Anschluß eines Endgliedes (25) eines Kettenstrangabschnittes (26) des Laufkettennetzes ausgebildete Teil (19) ein Anschlußstück (18) ist, welches das Lagerstück (5) U-förmig umfaßt.

2.) Gleitschutzkette nach Anspruch 1, **dadurch gekennzeichnet,** daß das Lagerstück (5) als scheibenförmiger Körper ausgebildet ist und eine Dicke aufweist, die annähernd dem Durchmesser des Endabschnittes (1) der inneren Halterung (2) entspricht und wobei das Lagerstück (5) eine annähernd mittig angeordnete, schlitzförmig ausgebildete Ausnehmung (6) zur Aufnahme des Endabschnittes (1) mit seiner nietenkopfförmigen Aufstauchung (3) der inneren Halterung (2) sowie zur Lagerung des Umlenkstückes (14) aufweist.

3.) Gleitschutzkette nach Anspruch 2, **dadurch gekennzeichnet,** daß die Ausnehmung (6) eine Breite aufweist, welche wenig größer als der Durchmesser des Endabschnittes (1) der inneren Halterung (2) ist und eine Länge aufweist, welche annähernd 2/3 der Länge des Lagerstückes (5) enspricht.

4.) Gleitschutzkette nach Anspruch 3, **dadurch gekennzeichnet,** daß die Ausnehmung (6) annähernd auf ihrer halben Länge eine Erweiterung (10) zur Aufnahme der nietenkopfförmigen Aufstauchung (3) des Endabschnittes (1) der inneren Halterung (2) aufweist.

5.) Gleitschutzkette nach Anspruch 1, **dadurch gekennzeichnet,** daß das Anschlußstück (18) U-förmig ausgebildet ist, wobei seine Schenkel (20' bzw. 20") über einen Steg (21) mit einem Abstand voneinander angeordnet sind, welcher wenig größer als die Dicke des Lagerstückes (5) ist und das Anschlußstück (18) über das Lagerstück (5) steckbar ist.

6.) Gleitschutzkette nach Anspruch 5, **dadurch gekennzeichnet,** daß das Anschlußstück (18) in seinen Schen keln (20' bw. 20") mittig angeordnete Schlitze (22' bzw. 22") aufweist, welche beim Aufstecken auf das Lagerstück (5) dessen Erweiterung (10) der Ausnehmung (6) sowie die sich dort befindende nietenkopfförmige Aufstauchung (3) des Endabschnittes (1) der inneren Halterung (2) frei lassen.

7.) Gleitschutzkette nach Anspruch 5, **dadurch gekennzeichnet,** daß die Länge des Anschlußstückes (18) kürzer ist als die Länge der schlitzförmig ausgebildeten Ausnehmung (6) im Lagerstück (5) und in dem überstehenden Ende (11) der Ausnehmung (6) das Umlenkstück (14) mit seinem einen Ende (12) beweglich befestigt ist.

8.) Gleitschutzkette nach Anspruch 1, **dadurch gekennzeichnet,** daß das Umlenkstück (14) als Lastschlaufe, beispielsweise in Schäkelform ausgebildet ist und mit seinem einen Ende (12) in der Ausnehmung (6 bzw. 11) des Lagerstückes (5) beweglich gelagert ist und mit seinem anderen Ende (16) entweder das Endglied (28) das Spannstranges (17) hält oder den durch sich hindurchgeführten Spannstrang (15) umlenkt.

9.) Gleitschutzkette nach Anspruch 8, **dadurch gekennzeichnet,** daß an dem dem Spannstrang (15) zugeordneten Ende (16) des Umlenkstückes (14) eine die Umlenkung des Spannstranges (15) fördernde Rolle (17) vorgesehen ist.

Fig.1a

Fig.1b

Fig.1c

Fig.2a

Fig.2b

Fig .2c

Fig.3a

Fig.3b

Fig.4a

Fig.4b

Fig.4c

Fig.4d

Fig.5a

Fig.5b

Fig.5c

Fig.5d

Fig.5e